# EUROPEAN PATENT APPLICATION

(11) **EP 0 843 450 A2**
(43) Date of publication of application: **20.05.1998**
(21) Application number: 97308235.7
(22) Date of filing: 15.10.1997
(51) Int. Cl.: H04L 29/06, G06F 17/30

(54) **Distributed media processing server and communication network using the same**

(30) Priority: 15.10.1996 JP 272067/96
(71) Applicant: NEC CORPORATION, Tokyo (JP)
(72) Inventor: Aramaki, Toshiya, Minato-ku Tokyo (JP)
(74) Representative: Moir, Michael Christopher

(57) **Abstract**

A distributed media processing server and a communication network of the present invention feature high reliability for the distribution of loads among a plurality of distributed media processing servers and against faults, and reduces the loads of the individual client. Each server has input ports and output ports connected to the network, a media processing section for executing media processing, a communication processing section for transferring data output from the media processing section and performing communication processing, and server information storing means for storing the names, addresses, functions and operating statuses of the servers.

## Description

### Background of the Invention

The present invention relates to a distributed media processing server to be connected to a communication network together with the other distributed media processing servers and a communication network including the same and, more particularly, to a distributed media processing server capable of distributing a media processing load, and in at least its preferred embodiments capable of performing efficient load distribution processing when a fault occurs in the server, and of enhancing fault resistivity, and a communication system including the same.

Distributed arrangements of servers are disclosed in, e.g., Japanese Patent Laid-Open Publication No. 4-271455 entitled "Load Distributed Control System", Japanese Patent Laid-Open Publication No. 7-56838 entitled "Distributed Server Control System", and Japanese Patent Laid-Open Publication No. 7-64926 entitled "Distributed Server System".

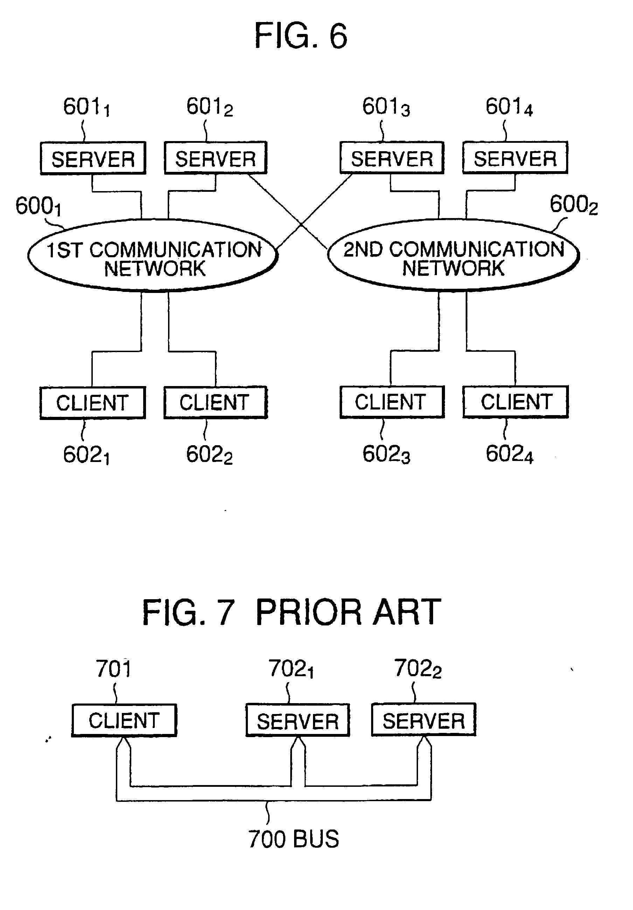

The load distributed control system taught in the above Laid-Open Publication No. 4-271455 is shown in FIG. 7. As shown, a plurality of servers 7021 and 7022 send information representative of their load statuses to a client 701 via a bus 700. In response, the client 701 determines the load statuses of the servers 702₁ and 702₂ and then requests one of them to perform processing. This kind of scheme, however, requires the client 701 to monitor the load statuses of the servers 702₁ and 702₂.

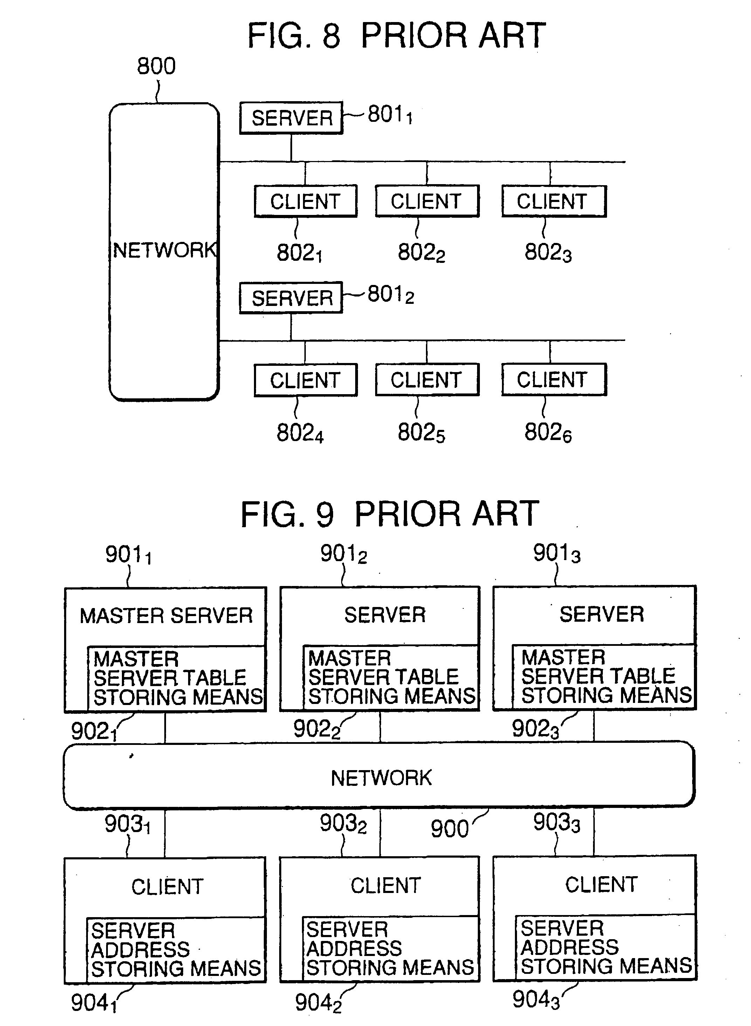

FIG. 8 shows the distributed server control system disclosed in the above Laid-Open Publication No. 7-56838. As shown, clients 802₁-802₃, 802₄-802₆ each monitors heart beat signals output from servers 8011 or 8012 depending on grouping arrangement. When the heart beat signal output from the server 801₁, or 801₂ of the group does not reach the clients 802₁-802₃ or 802₄-802₆ over a preselected period to time, the client selects the server of other group, determining that a fault has occurred in the server of the own group.

Also, the server 801₂ monitors the heat beat signal of the server 801₁, which is assuming the main server, and the main server is replaced with the other server when a fault occurs therein. This scheme also requires the clients 802₁-802₆ to monitor the servers 801₁ and 801₂.

FIG. 9 shows the distributed server system disclosed in the above Laid-Open Publication No. 7-64926. As shown, the system includes servers 901₁-901₃ having master server table storing means 902₁-902₃, respectively. The servers 901₁-901₃ each stores the address information of the other servers in its master server table storing means 902. Clients 903₁-903₂ respectively include server address information storing means 904₁-904₃ storing preselected server address information each corresponding to a particular client. The server 9011 which is one of the plurality of servers plays the role of a master server and includes master server table storing means 902₁. The other servers interchange data with the master server 901₁ such that the contents of their server table storing means 902₂ and 902₃ are identical with the contents of the master server table storing means 902₁.

The server address information storing means 904₁-904₃ of the clients 903₁-903₃ each is used to hold the address for communicating with the associated server. When the address information of the servers 901₁-901₃ are respectively stored in the server address information storing means 904₁-904₃, the clients 903₁-903₃ communicate with the servers 901₁-901₃ on the basis of the stored address information.

When the address information of the servers 901₁-901₃ are not stored in the server address information storing means 904₁-904₃, the clients 903₁-903₃ inquire the servers 901₁-901₃ whose addresses are stored in the storing means 904₁-904₃, obtain the address information of the servers stored in the storing means 904₁-904₃, and then communicate with the desired servers 901₁-901₃. However, the problem is that when a fault occurs in the master server 901₁ having the master server table storing means 902₁ and rejects an access or when the contents of the storing means 902₁ are destroyed, the contents of the server table storing means 902₁-902₃ lose consistency.

As stated above, the systems shown in FIGS. 7 and 8 each requires each client to monitor the fault or the load status of each server, resulting in noticeable load on the system.

In the system shown in FIG. 9, a fault occurred in the master server 901₁ is apt to spread to all the servers.

### Summary of the Invention

It is therefore an object of at least the preferred embodiments of the present invention to provide a reliable distributed media processing server which makes it needless for a client to change server address information and thereby reduces the processing load of the client.

In accordance with one aspect of the present invention, a distributed media processing server connected to a communication network together with other distributed media processing servers, and capable of executing media processing in response to a request received from any one of a plurality of clients includes a communication processing section connected to the communication network for transmitting and receiving data via the network. A media processing section executes media processing in response to a notification output from the communication processing section. The communication processing section may periodically report to the other servers its own address on the network together with a medial processing function available with the server and the current load status of the server, i.e., server information. The server may additionally include server information storing means for updating, every time the server receives server information, the contents of the storing means relating to the server sent the server information.

The communication processing section may be constructed such that on receiving a media processing request which the server cannot deal with from a client, the processing section references the server information storing means in order to select another server which can deal with the request, and transfer the request to the server selected.

In any case, the server information storing means may delete its contents relating to the other servers not sent their server information within a preselected period of time.

In accordance with another aspect of the present invention, a communication network is also provided which includes the servers each having the above construction. An arrangement may be made such that communication between the clients connected to the network is effected via the server. This allows data output from a calling client to be subjected to media processing and then sent to a called client.

In each server having the above configuration, the communication processing section and media processing section are respectively assigned to data interchange and media processing. The operations of the two sections do not exert loads on each other or influence each other.

The servers periodically interchange their server information and therefore can each surely see the statuses of the other servers represented by the server information.

The server information includes the medial processing function and load status of the individual server. Therefore, a request sent from a client can be transferred to an adequate server. This allows the processing loads of the servers distributed and promotes efficient media processing.

Assume that the contents of the server information storing means relating to a server not sent its server information within the preselected period of time are deleted, as stated. Then, the server not sent the information and determined to be faulty is excluded from the processing. This prevents the fault of a single server from spreading to all the other servers.

Even when a fault occurs in a certain server executing media processing, a processing request can be transferred to another server. This insures media processing and enhances the reliable operation of the servers.

The servers with such advantages realize a desirable communication network. In the network, media processing is assigned to the servers in order to reduce the loads of the individual client. Therefore, adequate media data can be provided client by client.

### Brief Description of the Drawings

The above and other objects, features and advantages of the present invention will become apparent from the following detailed description (which is by way of example only) when taken in conjunction with the accompanying drawings in which:
FIG. 1 is a block diagram schematically showing a distributed media processing server embodying the present invention;
FIG. 2 shows the configuration of server information storing means included in the server of FIG. 1;
FIG. 3 is a flowchart demonstrating a sequence in which a communication processing section included in the server of FIG. 1 deals with processing request data;
FIG. 4 is a flowchart representative of a server information report sequence to be executed by the communication processing section;
FIG. 5 is a flowchart demonstrating an updating sequence to be executed by the server information storing means of the embodiment;
FIG. 6 shows a specific communication network including a plurality of distributed media processing servers each having the construction shown in FIG. 1; and
FIGS. 7, 8 and 9 each shows a specific conventional communication network including a plurality of distributed media processing servers.

### Description of the Preferred Embodiments

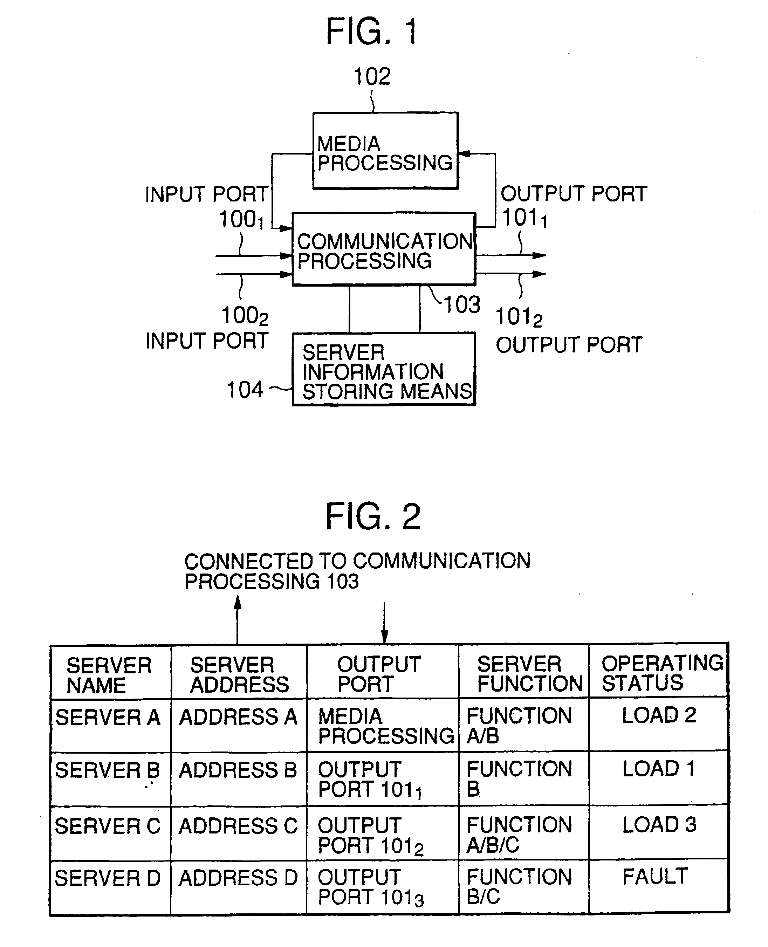

Referring to FIG. 1 of the drawings, a distributed media processing server embodying the present invention is shown and applicable to an ATM (Asynchronous Transfer Mode) communication system. The illustrative embodiment is characterized in that it has two input ports and two output ports connected to a communication network. The operation of the embodiment to be described is also true when three or more input ports and three or more outputs ports are connected to the communication network. While the description to be made with reference to FIG. 1 and successive figures does not refer to the kind of the communication network specifically, the embodiment is effectively applicable to various kinds of communication networks.

As shown in FIG. 1, the server has input ports 100₁ and 1002, output ports 101₁ and 101₂, a media processing 102, a communication processing 103, and server information storing means 104. It is to be noted that the words "media processing" refer to various kinds of data conversion including the compression and expansion of data, the conversion of text data to image data or audio data, and the conversion of a communication protocol.

The input ports 100₁ and 100₂ and output ports 101₁ and 101₂ are connected to a communication network, not shown. Data sent for the server and coming in through the network are received by the communication processing 103 via the input ports 101₁ and 101₂. Data to be sent from the server to another distributed media processing server or a desired client connected to the network are output from the communication processing 103 to the network via the output port 101₁ or 101₂.

On receiving the data via the input ports 100₁ and 100₂, the communication processing 103 delivers them either to the media processing 102 or to the network via the output port 1011 or 1012. The media processing 102 processes the data received from the communication processing 103 and feeds the result of processing to the communication processing 103. The communication processing 103 sends the result of processing to a desired client or another distributed media processing server via the network.

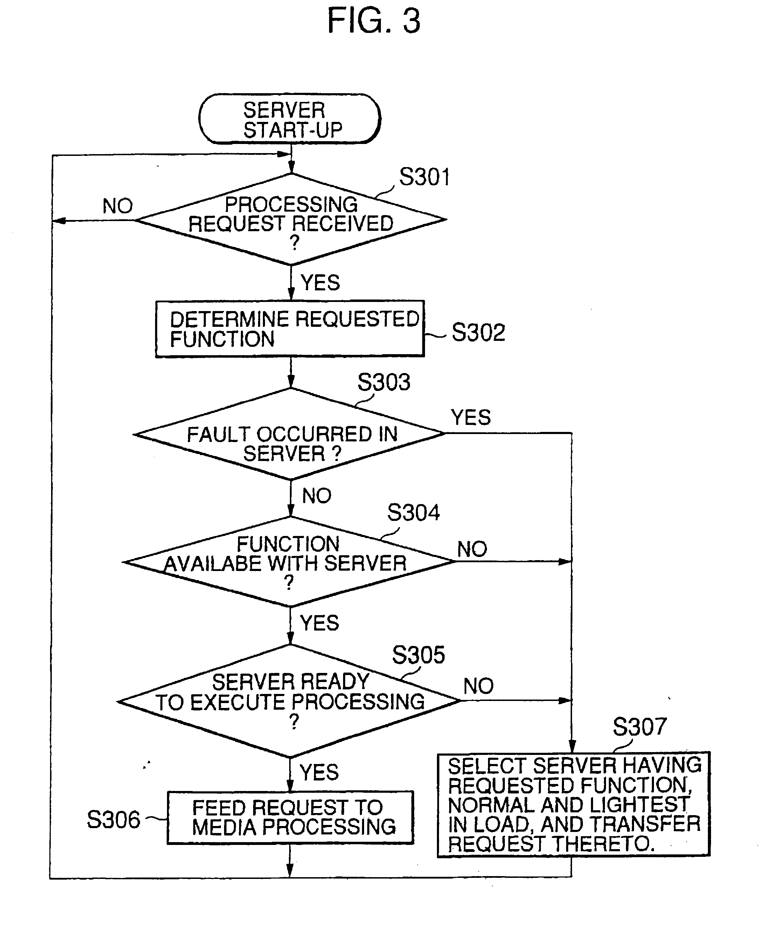

Reference will be made to FIGS. 2 and 3 for describing a specific procedure for receiving a processing request. FIG. 2 shows the configuration of the server information storing means 104 while FIG. 3 shows a sequence for dealing with processing request data.

As shown in FIG. 2, the server information storing means 104 stores the names and addresses of servers, output ports, server functions, and operating conditions. The server addresses refer to addresses on the communication network. The server functions refer to functions available with the individual server. Further, the operating conditions refer to load statuses including a fault. By accessing the storing means 104, the communication processing 103 determines to which of the media processing 102 and the output port 101₁ and 101₂ a processing request should be output. In the illustrative embodiment, the server shown in FIG. 1 and its destination are stored in the storing means 104 as a server A and a media processing, respectively.

As shown in FIG. 3, the communication processing 103 receives processing request data and determines a requested function represented by the data (steps S301 and S302). Then, the communication processing 103 determines whether or not the server to which it belongs is normal (step S303), whether or not the server can deal with the requested function (step S304), and whether or not the server is in a load status capable of executing the requested function (step S305). If the answers of all the steps S303-S305 are positive (Yes), the communication processing 103 executes the requested processing and delivers the result of processing to the media processing 102 (step S306). To execute the steps S303-S305, the communication processing 103 references the server information storing means 104.

Assume that the answer of any one of the steps S303-305 is negative (No). Then, the comunication processing 103 selects, among the servers capable of executing the requested function, the server whose load is lightest. The communication processing 103 sends a processing request to a distributed media processing server corresponding to the server selected.

As stated above, the illustrative embodiment has a media processing section and a communication processing section separate from each other and assigns the communication processing function and the processing request transferring function to the communication processing section. This frees the media processing section from loads ascribable to communication processing. The embodiment with such distributed processing loads is capable of performing rapid processing.

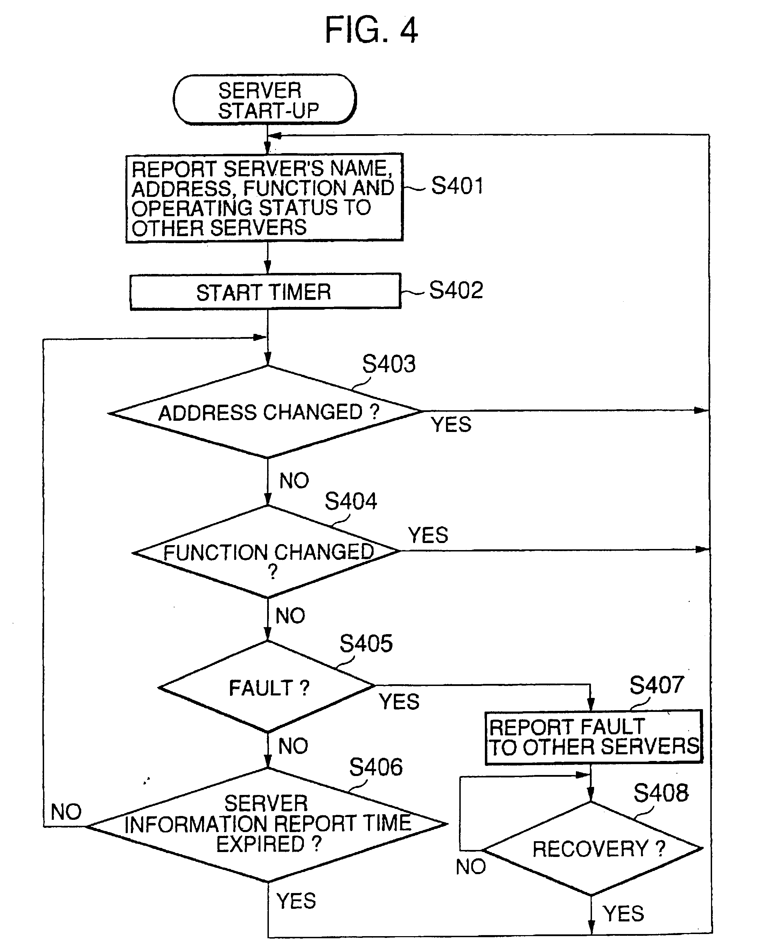

FIG. 4 demonstrates a server information report sequence to be also executed by the communication processing 103. As shown, on the start of operation, the communication processing 103 informs the other distributed media processing servers of the name, address, functions and operating condition of the server to which it belongs, i.e., server information (step S401). Then, the communication processing 103 starts a timer, not shown, (step S402).

Subsequently, the communication processing 103 determines whether or not the address has been changed (step S403), whether or not the functions have been changed (step S404), and whether or not a fault has occurred (step S405). The steps S403-5405 are repeated until a server information report time assigned to the server expires (Yes, step S406).

If the address or the functions have been changed, as determined in the step S403 or S404, the communication processing 103 reports the server information to the other distributed media processing servers (step S401). If a fault has occurred, as determined in the step S405, the communication processing 103 informs the other servers of the occurrence of a fault (step S407) and then determines whether or not recovery has completed (step S408).

When the preselected server information report time expires without any change in address or function or without any fault (Yes, step S406), the communication processing 103 returns to the step S401 in order to report the server information to the other servers. Stated another, way, the communication processing 103 periodically reports the server information to the other servers even when the address or the function is not changed or when a fault does not occur.

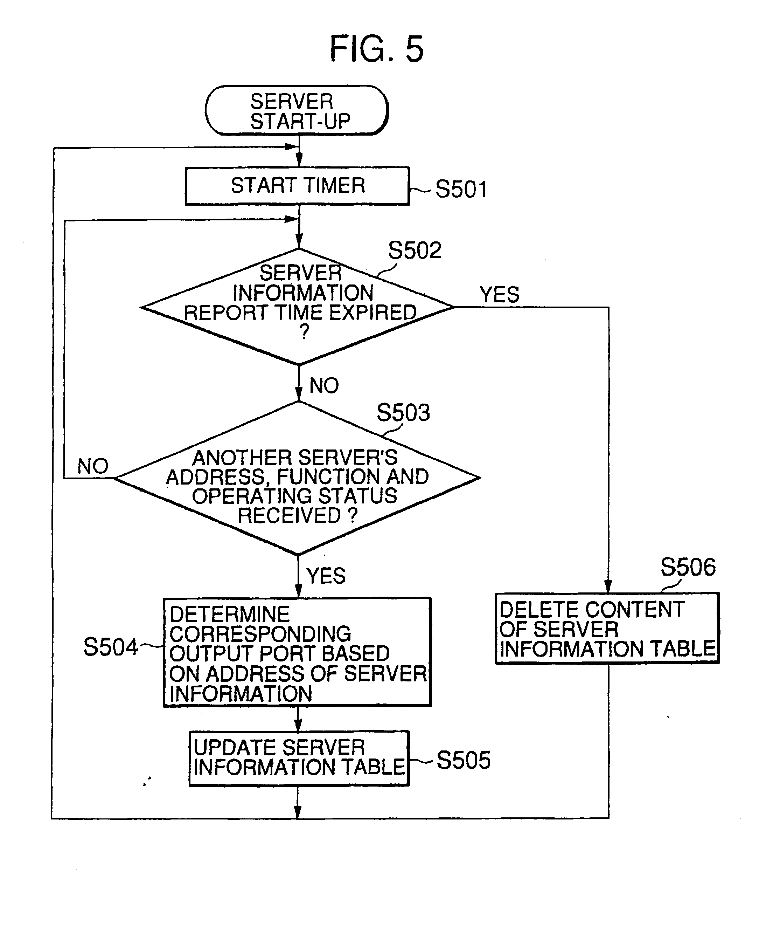

FIG. 5 shows a routine for updating the server information storing means 104. As shown, on the start of operation, the server starts the timer, not shown, (step S501). and then determines whether or not the server information report time has expired (step S502). If the answer of the step S502 is No, the server determines whether or not it has received server information from the other distributed media processing servers (step S503).

Assume that the server receives server information from any one of the other servers before the server information report time expires (No, step S502 and Yes, step S503). Then, the server determines the output port 101₁ or 101₂ to be assigned to the address of the received server information at the time of transmission (step S504), updates the server information storing means 104, and then returns to the step S501. If server information has not been received within the server information report time (Yes, step S502), the server deletes the contents of the storing means 104 relating to the server not sent the information (step S506) and then returns to the step S501.

Regarding the timer used for the decisions in the steps S402 and S501, the communication processing 103 and server information storing means 104 may each include a respective timer or may each process the output of a single timer in a particular manner, as desired.

In the illustrative embodiment, the distributed media processing servers each includes a respective timer. Each server checks the receipt of server information within the preselected period of time measured by the respective timer. If server information is not received from any one of the other servers within the preselected period of time, the server determines that the server not sent the server information is faulty or not connected to the network, and then deletes the contents of the server information storing means relating to such a server.

As stated above, in the embodiment, a plurality of distributed media processing servers periodically interchange server information and can see the addresses, functions and statuses of each other.

When a fault occurs in any one of the servers, the faulty server informs the other servers of its fault. Even when the faulty server fails to send server information, the other severs each determines, on the elapse of a preselected period of time, that the server failed to send the server information is faulty. Each server informed of the fault of a certain server determines that the certain server is faulty, and deletes it from the respective server information storing means. As a result, the faulty server is not used for media processing, and therefore the fault is prevented from spreading to the entire system.

In addition, a processing request is transferred between the servers in accordance with the function and load status. It follows that each client should only be provided with address information on at least one of the servers. This simplifies control over the obtainment of address information.

FIG. 6 shows a specific system including distributed media processing servers 601₁-601₄ each having the above configuration, clients 602₁-602₄, and a first and a second communication network 600₁ and 600₂. The networks 600₁ and 600₂ are assumed to be different from each other in the kind of communication medium (format, communication rate, etc.). When the clients 602₁ and 602₄, for example, communicate with each other, conversion for dealing with the different kinds of communication media of the networks 600₁ and 600₂ may be assigned to the server 601₂. As a result, the processing loads of the clients 602₁ and 602₄ are successfully reduced. In addition, the media processing to be executed by the client 602₁ or 602₄ may also be assigned to the server 601₂ for the same purpose.

In summary, it will be seen that the preferred embodiments of the present invention achieves the following advantages.

A plurality of distributed media processing servers each has a processing section made up of a communication processing section and a media processing section respectively assigned to data interchange and media processing. The operations of the two sections do not exert loads on each other, so that the server can perform rapid processing.

The servers periodically interchange their server information and therefore can each surely see the statuses of the other servers represented by server information.

The distributed processing loads in each server promotes efficient media processing.

Any one of the servers determined to be faulty is excluded from the processing. This prevents the fault of a single server from spreading to all the other servers and insures media processing, thereby enhancing the reliable operation of the servers.

The servers with such advantages realize a desirable communication network. In the network, media processing is assigned to the servers in order to reduce the loads of the individual client. Therefore, adequate media data can be provided client by client.

Although the present invention has been fully described by way of the preferred embodiments threof with reference to the accompanying drawings, various changes and modifications will be apparent to those having skill in this field. Therefore, unless these changes and modifications otherwise depart from the scope of the present invention, as defined by the claims they should be construed as included therein.

Each feature disclosed in this specification (which term includes the claims) and/or shown in the drawings may be incorporated in the invention independently of other disclosed and/or illustrated features.

The text of the abstract filed herewith is repeated here as part of the specification.

A distributed media processing server and a communication network of the present invention feature high reliability for the distribution of loads among a plurality of distributed media processing servers and against faults, and reduces the loads of the individual client. Each server has input ports and output ports connected to the network, a media processing section for executing media processing, a communication processing section for transferring data output from the media processing section and performing communication processing, and server information storing means for storing the names, addresses, functions and operating statuses of the servers.

## Claims

1. A distributed media processing server connected to a communication network together with other distributed media processing servers, and capable of executing media processing in response to a request received from any one of a plurality of clients, said server comprising:
a communication processing section connected to said communication network for transmitting and receiving data via said communication network; and
a media processing section for executing media processing in response to a notification output from said communication processing section.

2. A server as claimed in claim 1, wherein said communication processing section periodically reports to the other servers server information including a network address of said server on said communication network, a media processing function available with said server, and a current load status of said server, said server further comprising server information storing means for updating received contents of each of the other servers every time said server receives the server information.

3. A server as claimed in claim 2, wherein on receiving a media processing request which said server cannot deal with from any one of the clients, said communication processing section references said server information storing means in order to select one of the other servers capable of dealing with said media processing request, and transfers said media processing request to the server selected.

4. A server as claimed in any one of claims 1-3, wherein when server information is not received from any one of the other servers within a preselected period of time, said server information storing means deletes contents thereof relating to the server from which said server information is not received.

5. A communication network comprising a plurality of said servers each having the configuration as claimed in any one of claims 1-4.

6. A network as claimed in claim 5, wherein the plurality of clients connected to said network communicate with each other via said servers, so that data sent from a calling client is subjected to media processing and then sent to a called client.
